# EUROPEAN PATENT SPECIFICATION

(11) **EP 1 539 395 B1**
(45) Date of publication and mention of the grant of the patent: **10.03.2010**
(21) Application number: 03762915.1
(22) Date of filing: 23.06.2003
(51) Int. Cl.: B21D 53/14, F16G 5/16

(54) **METHOD FOR FORMING A TRANSVERSE ELEMENT FOR A PUSH BELT FOR A CONTINOUSLY VARIABLE TRANSMISSION**
VERFAHREN ZUR HERSTELLUNG EINES QUERELEMENTS FÜR EINEN SCHUBRIEMEN FÜR EIN STUFENLOSES GETRIEBE
PROCEDE DE FORMATION D'UN ELEMENT TRANSVERSE POUR UNE COURROIE DE POUSSEE DESTINEE A UNE TRANSMISSION VARIABLE CONTINUE

(30) Priority: 03.07.2002 NL 1020990
(43) Date of publication of application: 15.06.2005
(73) Proprietor: Bosch Transmission Technology b.v., 5026RA Tilburg (NL)
(72) Inventor: MUTSAERS, Robert, Arnoldus, Andreas, NL-5062 LV Oisterwijk (NL); VAN LIEMPD, Jeroen, Herman, NL-4854 RM Bavel (NL); PRINSEN, Lucas, Hendricus, Robertus, Maria, NL-5175 AC Loon Op Zand (NL)
(74) Representative: Dekker-Garms, Alwine Emilie
(86) International application number: PCT/NL2003/000466
(87) International publication number: WO 2004/004942

(56) References cited:
- EP-A- 1 132 648
- PATENT ABSTRACTS OF JAPAN vol. 2000, no. 02, 29 February 2000 (2000-02-29) -& JP 11 309522 A (HONDA MOTOR CO LTD), 9 November 1999 (1999-11-09)

## Description

The present invention relates to a method for forming a transverse element out of basic material, which transverse element is designed to be part of a push belt for a continuously variable transmission.

A push belt for a continuously variable transmission is generally known. Usually, such a push belt comprises two endless, ribbon-like carriers shaped like a closed loop for carrying a relatively large number of transverse elements. The transverse elements are moveably arranged along the entire circumference of the carriers, wherein they are able to transmit forces which are related to a movement of the push belt during operation.

In the following description of the transverse element, the mentioned directions refer to the situation in which the transverse element is part of the push belt. A longitudinal direction of the transverse element corresponds to a circumferential direction of the push belt. A vertical transverse direction of the transverse element corresponds to a radial direction of the push belt. A horizontal transverse direction of the transverse element corresponds to a direction perpendicular to both the longitudinal direction and the vertical transverse direction. The indication of any transverse element as subsequent transverse element or previous transverse element with respect to an adjacent transverse element is related to a direction of movement of the push belt. A dimension in the longitudinal direction of the transverse element is hereinafter also referred to as thickness of the transverse element.

In the horizontal transverse direction, the transverse element is on both sides provided with recesses for at least partially receiving the carriers. For the purpose of supporting the carriers, the transverse element comprises carrying surfaces. In the horizontal transverse direction, for the purpose of contact between the transverse element and pulley sheaves of a pulley of a continuously variable transmission, the transverse element is on both sides provided with pulley sheave contact surfaces, which are divergent in the direction of the carrying surfaces. The terms "top" and "bottom", which are hereinafter applied, are related to the direction of divergence; this is defined as being from bottom to top.

In the vertical transverse direction, from top to bottom, the transverse element comprises successively a basic portion, a neck portion of which the dimensions in the horizontal transverse direction are smaller than those of the basic portion, and a top portion of which the dimensions in the horizontal transverse direction at the location of the connection to the neck portion are larger than those of the neck portion. The basic portion comprises the carrying surfaces and the pulley sheave contact surfaces. In the push belt, the basic portion is located at the side of the inner circumference of the push belt, whereas the top portion is located at the side of the outer circumference of the push belt.

The transverse element has two main body surfaces, namely a front surface and a back surface, which extend substantially parallel with respect to each other, substantially perpendicular to the longitudinal direction. At least a part of the front surface of the transverse element is designed to abut against at least a part of the back surface of a subsequent transverse element in the push belt, whereas at least a part of the back surface of the transverse element is designed to abut against at least a part of the front surface of a previous transverse element in the push belt.

At one of the main body surfaces of the transverse element, usually the front surface, a projection is arranged. Usually, this projection is located on the top portion of the transverse element, and corresponds to a hole in the other main body surface of the transverse element. In the push belt, the projection of a transverse element is at least partially located in the hole of a subsequent transverse element. The projection and the corresponding hole serve to prevent mutual displacement of adjacent transverse elements in a plane perpendicular to the circumferential direction of the push belt.

In the push belt, two adjacent transverse elements are tiltable with respect to each other about a tilting line, which is usually defined on the front surface of each transverse element, and which extends along the entire width of the transverse element. Usually, the tilting line is formed as a line of a convex transition region at the front surface which is the highest in the longitudinal direction, wherein the transition region constitutes an even and round transition of two portions of said front surface, which are oriented at a relatively small angle with respect to each other. Usually, the tilting line extends in an upper part of the basic portion. An important function of the tilting line is guaranteeing mutual contact between adjacent transverse elements which, during operation of the push belt, are located between the pulley sheaves of a pulley. The tilting line is intended to realise that the forces which are related to a movement of the push belt are transmitted from any transverse element to a subsequent transverse element in a controlled manner.

Usually, in the vicinity of the tilting line, the transverse element is provided with a step, that is an abrupt transition of the dimensions in the longitudinal direction of the transverse element. Usually, the step is formed as a region which substantially extends in the longitudinal direction and the horizontal transverse direction, along the entire width of the transverse element. In a transverse element having a step, the dimensions in the longitudinal direction of an under part of the basic portion are smaller than the dimensions in the longitudinal direction of other parts of the transverse element. In this way, it is prevented that the under parts of the basic portions of the transverse elements touch each other when the transverse elements move over a pulley. An additional advantage is that weight is saved.

The transverse element is manufactured out of basic material being shaped like a sheet by means of a blanking process. In the blanking process, a cutting member and a supporting member are applied, wherein the cutting member is designed to cut the transverse element out of the basic material under the influence of a cutting force, and wherein the supporting member is designed to support the transverse element by a supporting force during the blanking process. During the blanking process, the cutting member penetrates the basic material under the influence of pressure, wherein a mutual movement of the cut transverse element and the basic material is allowed. At that moment, the transverse element is clamped between a cutting surface of the cutting member and a supporting surface of the supporting member.

It is noted that a blanking process as described is known from JP 11309522.

Preferably, during the blanking process, the front surface of the transverse element is formed at the side of the supporting member, whereas the back surface is formed at the side of the cutting member. Due to the pressure prevailing during the blanking process, the shape of the supporting surface is then a determining factor regarding the shape of the front surface of the transverse element, whereas the shape of the cutting surface is a determining factor regarding the shape of the back surface of the transverse element. The circumference of both the supporting surface and the cutting surface substantially corresponds to the circumference of the transverse element.

With respect to the following, it is true that the term "blanking member" relates to both the supporting member and the cutting member, and that the term "blanking surface" relates to both the supporting surface and the cutting surface.

Usually, for the purpose of obtaining a transverse element which is provided with a step, use is being made of stepped basic material. However, it is also possible to use flat basic material, wherein the step is arranged in the relevant main body surface of the transverse element during the blanking process. It will be clear that in the latter case, the blanking process requires more power than in the first-mentioned case, in otherwise equal conditions.

It is usually true that the thickness slightly increases, starting from the tilting line of the transverse element and going in the direction of the upper side of the transverse element. At the most, the difference between the thickness at the upper side and the thickness at the tilting line is a few micrometers. The shape of the blanking surfaces is also determined by the desire to obtain this distribution of the thickness along the height of the transverse element during the blanking process.

In the following, an important problem which is related to the known blanking process is described.

Due to the design in which the transverse element is provided with the tilting line, uneven load of a blanking member occurs during the blanking process, which uneven load manifests itself as pressure differences over the blanking surface of the blanking member. An important reason for this is that the tilting line is not centrally located in the vertical transverse direction. As a result of the uneven load of the blanking member, the blanking member is inclined to perform a tilting movement, and usually actually performs such a movement. In practice, the tilting movement of the blanking member and the pressure differences over the blanking surface lead to deviations of the desired shape of the transverse element, which in an unfavourable case can even be inadmissible.

When stepped input material is used, which is usually the case, a blanking surface of a blanking member touches the step at one stage during the blanking process. Subsequently, at the location of the contact between the blanking surface and the step, a force is exerted, which results in a torque which contributes to a large extent to the inclination to tilt or to an actual tilting movement of the transverse element.

As the shape of the blanking surface is also adapted to the shape of the basic material to be applied, the shape of the basic material should accurately be defined, in particular when this is stepped. However, this is undesirable, especially in view of the costs. Therefore, in practice, the shape of the basic material of different series is different. The uncertainty regarding the shape of the basic material makes the tilting movement of the blanking member to be expected during the blanking process hard to predict or unpredictable. As a result of the fixed shape of the blanking surface, it is not possible to compensate for the shape of the basic material during the blanking process. A disadvantageous consequence is that the obtained distribution of the thickness over the height of the transverse element is different for different series of transverse elements. In that case, it may appear that the distribution of the thickness of a series of transverse elements is inadmissible, and that the transverse elements can not be used any further, or that in behalf of the relevant series another blanking member needs to be applied.

It is an objective of the present invention to partially or even completely solve the described problem. According to the present invention, the set objective can be reached by adapting the blanking members with which the transverse elements are formed in such a way that they are suitable for application in a method comprising a step of forming a tilting line on a main body surface of the transverse element, wherein the main body surface of the transverse element on which the tilting line is being formed is processed simultaneously by at least two blanking member parts.

According to the invention, at least one of the blanking members is divided into at least two separate blanking member parts, with which a main body surface of the transverse element on which a tilting line is being formed is processed simultaneously during the blanking process. Therefore, the blanking member parts correspond to different interconnected parts of the relevant main body surface of the transverse element.

In the following, a number of advantages which is related to simultaneously processing a main body surface of the transverse element under the application of at least two blanking member parts is described. For the sake of surveyability, a division of the blanking member into two blanking member parts is herewith assumed, wherein it is remarked that the said advantages also apply when the blanking member is divided into more than two blanking member parts.

An advantage of the division of the blanking member into two blanking member parts is that the forming process of the transverse elements during a blanking process can be controlled in a better way. An important reason for this is that the inclination to tilt or an actually performed tilting movement is decreased or even reduced to practically zero. After all, each of the blanking member parts is smaller than the entire blanking member, so that the arm at the possible building up of a torque is smaller, and the resulting torque is smaller therewith. When the division of the blanking member is such that the tilting line is centrally located relative to one of the blanking member parts in the vertical transverse direction, and the projection/hole is centrally located relative to another of the blanking member parts in the vertical transverse direction, then the arm can even be negligibly small for all blanking member parts.

The forming process of the transverse elements can also be controlled better, because the accuracy of the one part is independent of the accuracy of the other part in the case of a divided blanking member, as a result of which both blanking member parts can be separately optimised. In the case that the division of the blanking member is such that one of the blanking member parts serves inter alia for forming the tilting line on the main surface of the transverse element, while the other of the blanking member parts serves inter alia for forming the projection/hole on said main surface, said one of the blanking member parts can be optimised regarding the desired position of the tilting line, while said other of the blanking member parts can be optimised regarding the desired position of the projection/hole. It is also possible to accurately adapt the shape of both blanking member parts to the desired distribution of the thickness over the height of the transverse element. All this contributes to an increased accuracy of the obtained transverse element with respect to the case in which an undivided blanking member is applied.

As a consequence of the division of the blanking member into two blanking member parts, the blanking member parts can be differently loaded during the blanking process, as a result of which it is simpler to control the forming process of parts of the transverse element, which is beneficial to the accuracy of the transverse element. In a blanking process in which an undivided blanking member is applied, it is also possible to differently load different parts of the blanking member, but this is only possible to a limited extent, because differences of the load which are too large can cause breaking of the blanking member. Moreover, the mutual position of the blanking member parts can be varied in a simple manner. As a result, assuming a certain configuration, the blanking member which comprises the two parts can simply be made suitable for another type of transverse element or simply be adapted to another type of basic material.

Another advantage of the division of the blanking member into two blanking member parts is that the blanking member parts are easy to manufacture. In an undivided blanking member, it is particularly difficult to process the recesses which are located on both sides of the blanking member.

Yet another advantage of the division of the blanking member into two blanking member parts is that the blanking member parts can have mutually strongly different blanking surfaces, without the distribution of forces over the blanking member being disturbed. After all, as already remarked in the foregoing, the blanking member parts can be loaded separately. This offers the possibility of designing portions of the transverse element such that they are smaller, particularly the top portion of the transverse element, as a result of which weight is saved and less material is consumed. Usually, in known transverse elements, the top portion is larger than is necessary in view of the forces which occur during operation of the push belt, only due to preventing a too uneven load of a blanking member during the blanking process.

It is noted that a blanking process of an element for a continuously variable transmission, in which a divided punch and an undivided counter punch are applied, is known from EP 1 132 648. In particular, the divided punch comprises an element blanking punch and a hole forming punch, which are movable in unison with each other. The hole forming punch serves for forming a hole in the element. Furthermore, the hole forming punch serves for forming a shallow recess around the hole, so that a clearance is obtained, which is used for clearing a raised area around a nose of another element, which may be fitted into the hole. The element blanking punch is only used for performing a cutting action.

The invention will be explained in more detail on the basis of the following description of preferred embodiments of the invention with reference to the drawing, in which equal reference signs indicate equal or similar parts, and in which:
figure 1 is a diagrammatical side view of a continuously variable transmission having a push belt;
figure 2 is a front view of a transverse element for a push belt for a continuously variable transmission;
figure 3 is a side view of the transverse element which is shown in figure 2;
figure 4 is a side view of two successive transverse elements as present between a pulley of the continuously variable transmission which is shown in figure 1;
figure 5 shows a diagrammatical longitudinal section of a blanking area of a blanking device, as well as basic material being positioned in there;
figure 6 is a side view of stepped basic material;
figure 7a diagrammatically shows a first stage of a blanking movement; figure 7b diagrammatically shows a second stage of the blanking movement; figure 7c diagrammatically shows a third stage of the blanking movement; and figure 7d diagrammatically shows a fourth stage of the blanking movement;
figure 8 is a diagrammatical side view of an undivided blanking member and basic material to be processed;
figure 9 is a diagrammatical side view of a divided blanking member and basic material to be processed;
figure 10 is a diagrammatical perspective view of two blanking member parts of the divided blanking member which is shown in figure 9;
figure 11 is a diagrammatical perspective view of the two blanking member parts which are shown in figure 10, in a configuration which is suitable for blanking a transverse element; and
figure 12 diagrammatically shows two possible configurations of the blanking member parts of the divided blanking member which is shown in figure 9.

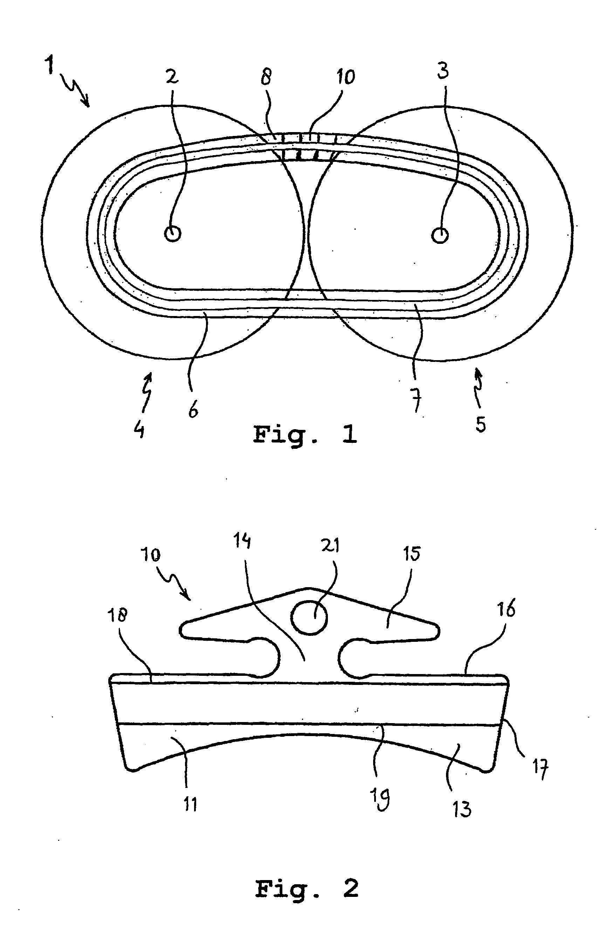

Figure 1 diagrammatically shows a continuously variable transmission, such as for utilisation in a motor vehicle. The continuously variable transmission is indicated in general by the reference sign 1.

The continuously variable transmission 1 comprises two pulleys 4, 5 being arranged on separate pulley shafts 2, 3. An endless push belt 6 being shaped like a closed loop is arranged around the pulleys 4, 5, and serves for transmitting torque between the pulley shafts 2, 3. Each of the pulleys 4, 5 comprises two pulley sheaves, wherein the push belt 6 is positioned and clamped between said two pulley sheaves, so that with the help of friction a force may be transmitted between the pulleys 4, 5 and the push belt 6.

The push belt 6 comprises at least one endless carrier 7, which is usually composed of a number of rings. Along the entire length of the carrier 7, transverse elements 10 are arranged, wherein the transverse elements 10 are mutually adjacent to each other and are moveable with respect to the carrier 7 in circumferential direction. For the sake of simplicity, only a number of these transverse elements 10 is shown in figure 1.

In figure 1, it can be seen that a part of the push belt 6 which is located outside the pulleys 4, 5 is convexly bent. Said part is indicated as push part 8, and is that part of the push belt 6 in which the transverse elements 10 move from the driving pulley, in this example pulley 4, to the driven pulley, in this example pulley 5, during operation of the continuously variable transmission 1.

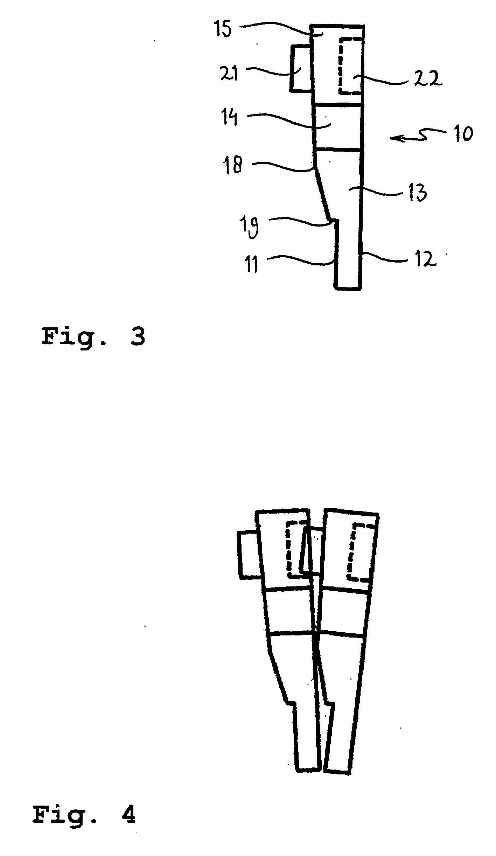

Figures 2 and 3 show a transverse element 10. A front surface of the transverse element 10 is indicated in general by the reference sign 11, whereas a back surface of the transverse element 10 is indicated in general by the reference sign 12. In the following, both the front surface 11 and the back surface 12 are also indicated as main body surface 11, 12.

In the vertical transverse direction, the transverse element 10 comprises successively a basic portion 13, a relatively narrow neck portion 14, and a top portion 15 which is shaped like the tip of an arrow. In the push belt 6, the basic portion 13 is located at the side of the inner circumference of the push belt 6, whereas the top portion 15 is located at the side of the outer circumference of the push belt 6. Furthermore, in a push belt 6, at least a portion of the front surface 11 of the transverse element 10 abuts against at least a portion of the back surface 12 of a subsequent transverse element 10, whereas at least a portion of the back surface 12 of the transverse element 10 abuts against at least a portion of the front surface 11 of a preceding transverse element 10. At the transition to the neck portion 14, the basic portion 13 of the transverse element as shown in figure 2 comprises two carrying surfaces 16 which serve for supporting two carriers 7. Furthermore, the basic portion 13 comprises two pulley sheave contact surfaces 17. When the transverse element 10 moves over the pulley 4, 5, contact between the transverse element 10 and contact surfaces of the pulley sheaves is realised through said pulley sheave contact surfaces 17.

At the front surface 11 of the transverse element 10, a tilting line 18 is defined. The tilting line 18 is located at the basic portion 13, and extends in the shown example along the entire width of the transverse element 10. In figure 2, it can be seen that in this example, the tilting line 18 extends close to the carrying surfaces 16, whereas in figure 3, it can be seen that the dimensions of the basic portion 13 in the longitudinal direction are the largest at the location of the tilting line 18. An important function of the tilting line 18 is guaranteeing mutual contact between two adjacent transverse elements 10, when said transverse elements 10 move over one of the pulleys 4, 5 during a movement of the push belt 6, for example. Figure 4 serves to illustrate the configuration of two successive transverse elements 10 as present between a pulley 4, 5. In this figure, it can clearly be seen that the transverse elements 10 contact each other only through the tilting line 18.

At a distance from the tilting line 18, at a position underneath said tilting line 18, a step 19 is located which constitutes an abrupt transition in the thickness of the transverse element 10, as can be seen in figure 3. Under the application of the step 19, the thickness of an under part of the basic portion 13 is smaller than the thickness of other parts of the transverse element 10, whereby it is prevented that the under parts of the basic portions 13 of the transverse elements 10 touch each other when the transverse elements 10 move over a pulley 4, 5. In figure 4, it is shown that in such a case, defined contact only takes place over the tilting line 18, and that under parts of the basic portions 13 of the different transverse elements 10 do not contact each other.

Also, on the front surface 11 of the transverse element 10, a projection 21 is arranged. In the shown example, the projection 21 is located on the top portion 15, and corresponds to a hole in the back surface 12. In figure 3, the hole is depicted by means of dotted lines and indicated by the reference sign 22. In the push belt 6, the projection 21 of the transverse element 10 is at least partially located in the hole 22 of a subsequent transverse element 10. The projection 21 and the corresponding hole 22 serve to prevent mutual displacement of adjacent transverse elements 10 in a plane perpendicular to the circumferential direction of the push belt 6.

The transverse element 10 is manufactured by means of a blanking process, wherein a supporting member and a cutting member are applied. The supporting member serves to support the transverse element 10 during the blanking process, whereas the cutting member serves to cut the transverse element 10 out of basic material being shaped like a sheet during the blanking process.

In the following, it is continually assumed that during the blanking process, the front surface 11 of the transverse element 10 is formed by a supporting surface of the supporting member, whereas the back surface 12 of the transverse element 10 is formed by a cutting surface of the cutting member. That does not alter the fact that the invention also relates to the situation in which the front surface 11 is formed by the cutting surface and the back surface 12 is formed by the supporting surface.

The circumference of both the supporting surface and the cutting surface has substantially the same shape as the circumference of the transverse element 10 to be cut, wherein said surfaces, like the transverse element 10, comprise a basic portion, a relatively narrow neck portion, and a top portion which is shaped like the tip of an arrow. In the following description of the cutting member and the supporting member, a vertical height corresponds to the direction in which the basic portion, the neck portion and the top portion are successively located. A longitudinal direction corresponds to a direction perpendicular to the supporting surface and the cutting surface, respectively. A horizontal width corresponds to a direction perpendicular to both the longitudinal direction and the vertical height.

Besides the function of supporting the transverse elements 10, another important function may be assigned to the supporting member, namely pushing cut transverse elements 10 out of a blanking device in which the supporting member is arranged so as to be moveable in a longitudinal direction.

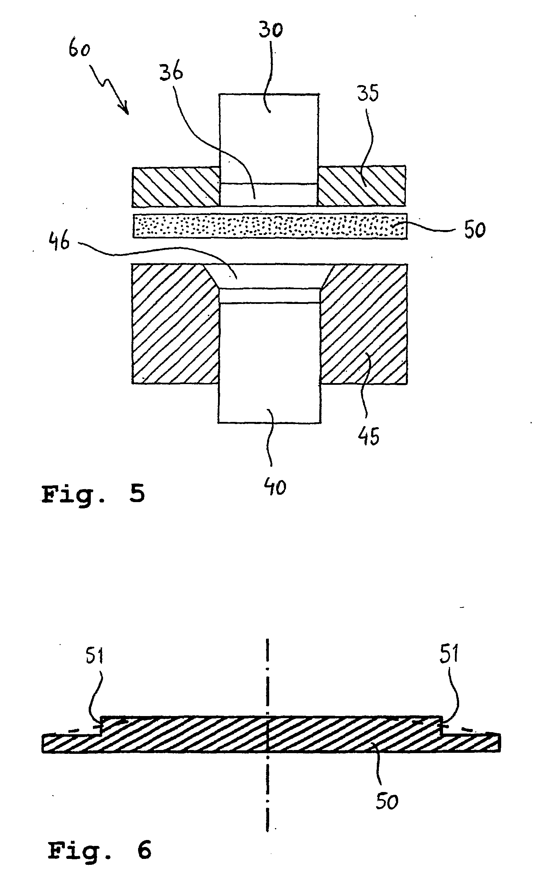

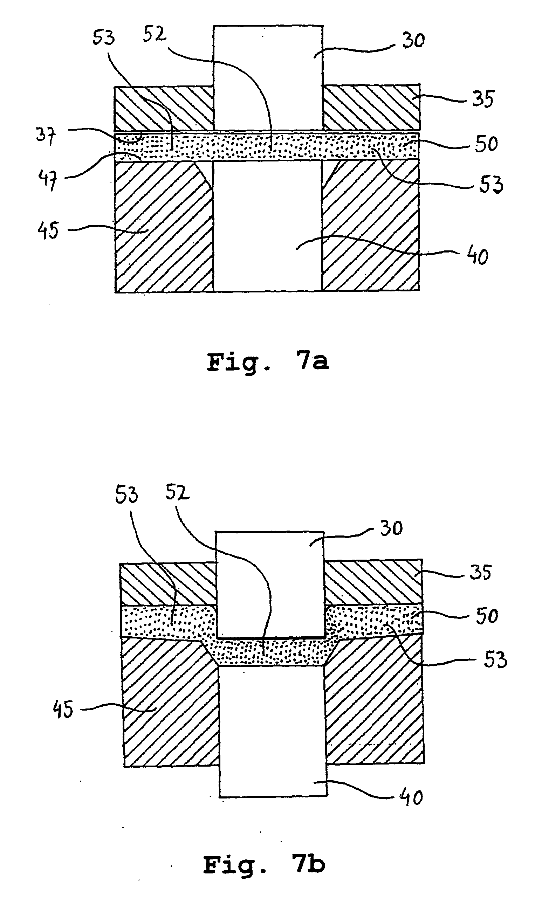

A blanking process of the transverse element 10 known per se will now be explained on the basis of figures 5 and 7a to 7d.

In figure 5, a blanking area of a blanking device 60 and basic material 50 being positioned in there are diagrammatically depicted. The basic material 50 can for example be shaped like a ribbon and have a side view as depicted in figure 6. The shown basic material 50 comprises two steps 51, and is thereby suitable basic material 50 for transverse elements 10 comprising a step 19, wherein such transverse elements 10 are cut out of the ribbon of basic material 50, continually on both sides of the centre line of the basic material 50, which is shown in figure 6.

The blanking device 60 comprises a cutting member 30 which is designed to cut the transverse element 10 out of the basic material. The cutting member 30 is inserted in a guiding accommodation 36 in a guiding sheet 35, an important function of which is guiding the cutting member 30 during a blanking movement. A supporting member 40 is in line with the cutting member 30, which is designed to support the transverse element 10 during the blanking process. As already remarked in the foregoing, the circumference of both the cutting member 30 and the supporting member 40 corresponds substantially to the circumference of the transverse element 10 to be cut. The supporting member 40 is inserted in a receiving accommodation 46 in a mould 45, an important function of which is guiding the cutting member 30, the supporting member 40, as well as the transverse element 10 during a blanking movement. The inner circumference of the receiving accommodation 46 corresponds substantially to the circumference of the cutting member 30, the supporting member 40, as well as the transverse element 10. The basic material 50 being shaped like a sheet is initially located between the cutting member 30 and the guiding sheet 35 on the one hand, and the supporting member 40 and the mould 45 on the other hand.

In the following, a blanking movement is described on the basis of figures 7a to 7d, in which different successive stages of the blanking movement are diagrammatically depicted.

In a first stage or initial stage, as diagrammatically shown in figure 7a, a blanking portion 52 of the basic material 50 is clamped between the cutting member 30 on the one hand, and the supporting member 40 on the other hand, whereas a rest portion 53 is clamped between a guiding surface 37 of the guiding sheet 35 and a mould surface 47 of the mould 45. In the process, the clamping forces act in a direction substantially perpendicular to the guiding surface 37 and the mould surface 47. The blanking portion 52 is the portion of the basic material 50 which is designed to form the transverse element 10.

In a second stage, as diagrammatically shown in figure 7b, the entirety of cutting member 30, blanking portion 52 and supporting member 40 is moved with respect to the guiding sheet 35, the rest portion 53 and the mould 45, under the influence of pressure. In the process, the direction of movement is substantially perpendicular to the guiding surface 37 and the mould surface 47. As a result of the mutual movement, the cutting member 30 penetrates the basic material 50, and the blanking portion 52 is pressed into the receiving accommodation 46 of the mould 45.

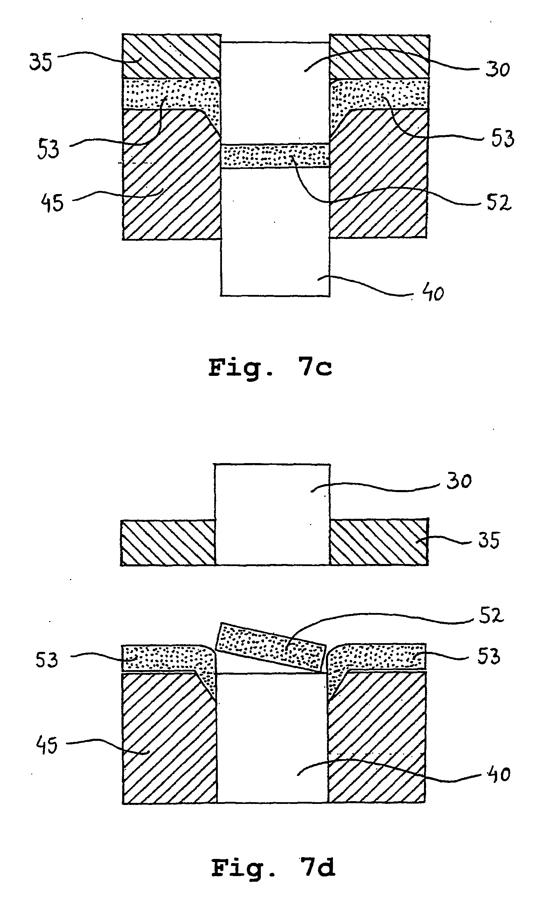

In a third stage, as diagrammatically shown in figure 7c, the blanking portion 52 gets completely detached from the rest portion 53 as a result of the continuing mutual movement. Hereafter, the movement of the entirety of cutting member 30, blanking portion 52 and supporting member 40 with respect to the guiding sheet 35, the rest portion 53 and the mould 45 is reversed, until the position of these components substantially corresponds to the position they had in the first stage, an important difference being the fact that the blanking portion 52 has now become detached from the rest portion 53.

In a fourth stage, as diagrammatically shown in figure 7d, the cutting member 30 and the guiding sheet 35 on the one hand, and the supporting member 40 and the mould 45 on the other hand, are mutually moved in such a way that the cutting member 30 and the guiding sheet 35 are retracted with respect to the blanking portion 52 and the rest portion 53, as a result of which said portions are released and may be taken out. In the process, the supporting member 40 may function as pushing member.

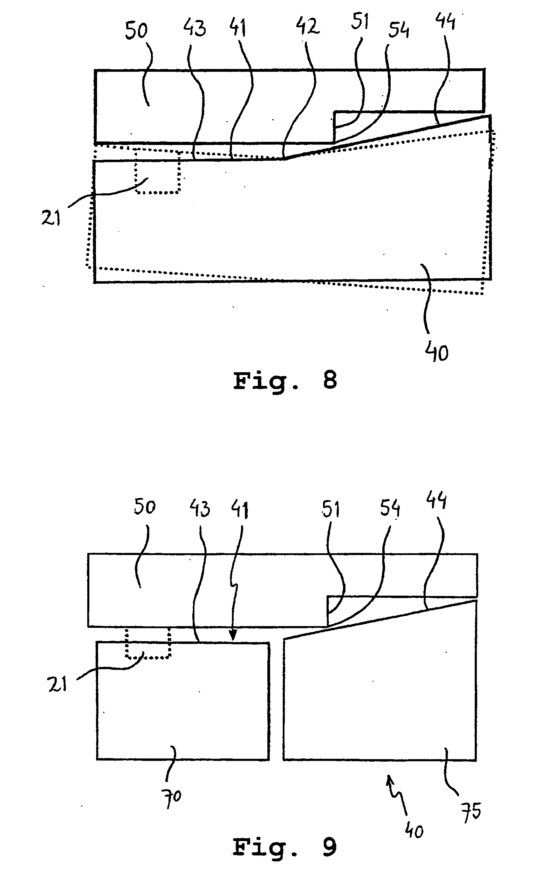

Figure 8 diagrammatically shows a side view of a known undivided blanking member 30, 40 and stepped basic material 50 to be processed. In the following, it is assumed as an example that the shown blanking member is the supporting member 40, and that the supporting surface 41 of said supporting member 40 serves to form the front surface 11 of the transverse element 10.

The supporting surface 41 of the supporting member 40 comprises two main surfaces which intersect over an intersecting line 42. A first main surface 43 serves for inter alia forming the projection 21 on the front surface 11 of the transverse element 10, whereas a second main surface 44 serves for inter alia forming the tilting line 18 on the front surface 11 of the transverse element 10. In figure 8, the projection 21 to be formed is indicated by means of dotted lines.

When the known supporting member 40 is pressed against the basic material 50 for the purpose of cutting the transverse element 10, the second main surface 44 of the supporting surface 41 first of all comes into contact with an edge 54 of the step 51 in the basic material 50. When the pressure increases during the blanking process, the supporting member 40 pushes material of the edge 54 upward, over the front surface 11 of the transverse element 10. This contributes to the forming process of the tilting line 18, which during the blanking process appears at a position which corresponds to the intersecting line 42.

When the supporting surface 41 and the basic material 50 come into contact, a force occurs at the location of the contact, wherein a torque is exerted on the supporting member 40. Under the influence of this torque, the supporting member 40 is inclined to tilt, as a result of which an uneven distribution of pressure over the front surface 11 of the transverse element 10 occurs, which distribution of pressure determines inter alia the dimensions of the transverse element in the longitudinal direction after the blanking process. Usually, the supporting member 40 actually performs a (minute) tilting movement, and assumes a tilted position, which is depicted by means of dotted lines in figure 8, in an exaggerated manner.

In the design of the supporting surface 41, an inclination to tilt, which is to be expected, and a possible actual tilting are accounted for, so that a desired shape of the front surface 11 of the transverse element 10 is obtained. It will be clear that the actual occurrence of the expected inclination to tilt and a possible actual tilting is a condition for obtaining the desired shape of the front surface 11. This is an important disadvantage of applying the undivided supporting member 40, because the extent to which the supporting member 40 is inclined to tilt and possibly actually tilts during the blanking process is dependent of for example the dimensions of the applied basic material 50. After all, the position of the step 51 has a direct influence on the position at which contact between the second main surface 44 of the supporting surface 41 and the basic material 50 takes place, which in its turn has an influence on the magnitude of the exerted torque, and thus on the extent to which the inclination to tilt and a possible actual tilting of the supporting member 40 occurs.

When the actual inclination to tilt and/or tilted position of the supporting member 40 during the blanking process deviate from the expected inclination to tilt and/or tilted position, then a transverse element 10 is obtained, of which the shape deviates from the desired shape. This means that the position of the tilting line 18 and particularly the position of the projection 21 deviate from the desired position. Also, the distribution of the thickness over the height of the transverse element 10 deviates from the desired distribution of the thickness. As a result of such differences between the desired shape and the actual shape, the obtained transverse element 10 may be unsuitable for application in a push belt 6.

Figure 9 diagrammatically shows a side view of a divided blanking member 30, 40 according to the invention and stepped basic material 50 to be processed. In the following, it is assumed as an example that the shown blanking member is the supporting member 40 and that the supporting surface 41 of said supporting member 40 serves to form the front surface 11 of the transverse element 10.

The supporting member 40 according to the invention comprises two parts, namely a first supporting member part 70 and a second supporting member part 75. In figure 9, for the sake of clarity, the supporting member parts 70, 75 are depicted at some distance with respect to each other.

In the shown example, the first supporting member part 70 comprises the firs main surface 43, and the second supporting member part 75 comprises the second main surface 44, wherein the first supporting member part 70 comprises the top portion which is shaped like the tip of an arrow and a part of the neck portion, and the second supporting member part 75 comprises the basic portion and another part of the neck portion. This is an advantageous division of the supporting member 40, which however does not mean that other divisions would not be possible within the scope of the invention.

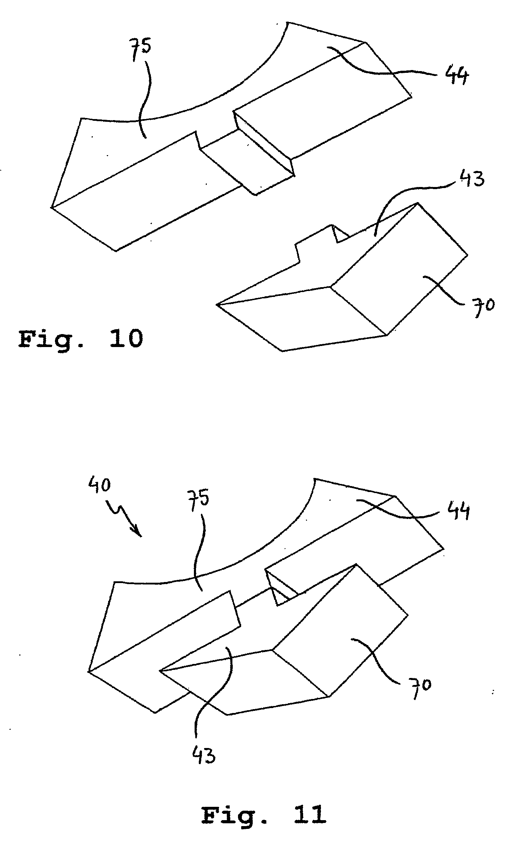

Figure 10 diagrammatically shows a perspective view of the two supporting member parts 70, 75. In figure 10, for the sake of simplicity, not all details of the main surfaces 43, 44 are depicted. For example, the shape of the first main surface 43 which is adapted to forming the projection 21 is not shown.

In figure 11, it is shown how the supporting member parts 70, 75 are mutually positioned for the purpose of a blanking process.

The application of the divided supporting member 40 according to the invention has a lot of advantages.

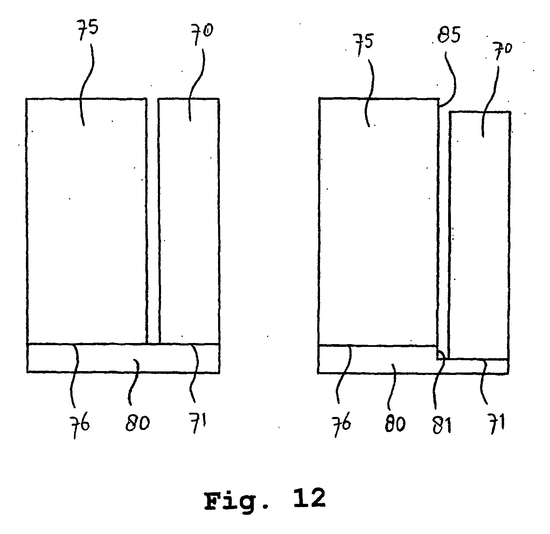

A first advantage is illustrated by means of figure 12, wherein the supporting member parts 70, 75 are depicted at some distance with respect to each other, for the sake of clarity. In this figure, it is shown how the position which is assumed by the supporting member parts 70, 75 with respect to each other in the longitudinal direction can be varied in an extremely simple manner. Changing the configuration of the supporting member parts 70, 75 is desirable when a transverse element 10 having another shape needs to be manufactured and/or when basic material 50 having another shape and/or other dimensions is applied. In such a case, the mutual position of the supporting member parts 70, 75 can simply be adapted by applying a suitable filler plate 80, which is placed against back surfaces 71, 76 of the supporting member parts 70, 75. The filler plate 80 can be shaped without a step, as shown in the left portion of figure 12, or may comprise a step 81, as shown in the right portion of figure 12. The mutual position of the supporting member parts 70, 75 can be such that the first main surface 43 and the second main surface 44 connect to each other in a stepped manner, as shown in the right portion of figure 12. In the shown example, a step 85 is part of the second supporting member part 75.

It will be clear that the application of the divided supporting member 40 offers big advantages over the application of the known undivided supporting member 40, thanks to the possibility of varying the shape. In the case of an undivided supporting member 40, the shape is fixed, and variation can only be obtained by applying different supporting members 40. This is disadvantageous, inter alia with a view to the costs, particularly because manufacturing the supporting member 40 is an expensive matter.

The fact that adapting the configuration of the supporting member 40 can take place in an extremely simple manner has high practical value, because the configuration of the supporting member 40 is often experimentally adapted to the desired shape of the transverse element 10.

A second advantage of the application of the divided supporting member 40 is that the supporting member parts 70, 75 can independently be adapted to requirements which are valid regarding parts of the transverse element 10 which the supporting member parts 70, 75 correspond to. For instance, in the shown example, the shape of the first supporting member part 70 can be adapted to the desired position of the projection 21 on the transverse element 10, whereas the shape of the second supporting member part 75 can be adapted to the desired position of the tilting line 18 on the transverse element 10. In this way, a higher accuracy can be reached than when an undivided supporting member 40 is applied, because in that case, the shape of the supporting member 40 as a whole is determined by both the desired position of the projection 21 and the desired position of the tilting line 18. In that case, parts of the supporting surface 41 can not be optimized independently.

Under the application of the divided supporting member 40 according to the invention, it is also possible to meet other requirements in a more accurate way, for example the different requirements which are valid regarding the distribution of the thickness over the basic portion 13 and the top portion 15 of the transverse element 10.

A third advantage of the application of the divided supporting member 40 is that the supporting member parts 70, 75 can be loaded differently during the blanking process. In the application of an undivided supporting member 40, the top portion 15 is often larger than necessary for absorbing the load which is experienced by the transverse element 10 during operation of the push belt 6. This is caused by the fact that during the blanking process in which undivided blanking members 30, 40 are applied, there needs to be a balanced distribution between the forces acting on the blanking members 30, 40 on the location of the basic portion and on the location of the top portion, in order to prevent breaking of the blanking members 30, 40. Under the application of a divided supporting member 40, the top portion 15 can be smaller, whereby weight is saved.

A fourth advantage of the application of the divided supporting member 40 is that the supporting member 40 will not be loaded by a torque during the blanking process, and that an inclination to tilt and possible actual tilting movements of the supporting member parts 70, 75 fail to occur. Therefore, for the purpose of the design of the supporting member parts 70, 75, there is no need to account for an expected inclination to tilt and a possible actual tilting, which is beneficial to the accuracy.

A fifth advantage of the application of the divided supporting member 40 is that the distance between the tilting line 18 and the step 19 can be decreased in the design of the transverse element 10. When the step 19 is displaced upward, weight-saving is obtained.

A sixth advantage of the application of the divided supporting member 40 is that such a supporting member 40 can relatively easily be manufactured. All surfaces of the supporting member 40 can easily be reached, processed and/or provided with coatings. In the manufacturing process of an undivided supporting member 40, processing the surfaces of the recesses which are located on both sides of the supporting member 40 is particularly a troublesome job.

It will be clear to a person skilled in the art that the scope of the present invention is not limited to the examples discussed above, but that several amendments and modification thereof are possible without deviating from the scope of the invention as defined in the appended claims.

Within the scope of the invention, it is possible that one of the cutting member 30 and the supporting member 40 is divided, and also that both the cutting member 30 and the supporting member 40 are divided. A divided blanking member 30, 40 can comprise more than two blanking member parts 70, 75.

With respect to the applied basic material 50, it is true that this may be stepped or may not be stepped.

## Claims

1. Method for forming a transverse element (10) out of basic material (50), which transverse element (10) is designed to be part of a push belt (6) for a continuously variable transmission (1), **characterised by** a step of forming a tilting line (18) on a main body surface (11) of the transverse element (10), which tilting line (18) serves for enabling the transverse element (10) to contact another transverse element (10) and to perform a tilting movement with respect to the other transverse element (10) in the push belt (6), wherein the main body surface (11) of the transverse element (10) on which the tilting line (18) is being formed is processed simultaneously by at least two blanking member parts (70, 75).

2. Method according to claim 1, wherein main surfaces (43, 44) of the blanking member parts (70, 75), which serve for contacting and processing this main body surface (11) of the transverse element (10), are held against each other in an unstepped manner.

3. Method according to claim 1 or 2, wherein basic material (50) which is provided with at least one step (51) is applied.

4. Method according to any of claims 1-3, wherein the blanking member parts (70, 75) are loaded differently.

5. Method according to any of claims 1-4, wherein one (70) of the blanking member parts (70, 75) is applied for inter alia forming a projection (21) on the main body surface (11) of the transverse element (10), whereas another (75) of the blanking member parts (70, 75) is applied for inter alia forming a tilting line (18) on the main body surface (11) of the transverse element (10).

6. Method according to any of claims 1-4, wherein one (70) of the blanking member parts (70, 75) is applied for inter alia forming a projection (21) on the main body surface (11) of the transverse element (10), wherein this blanking member part (70) is adapted to forming the projection (21) at a central position with respect to this blanking member part (70) in a vertical transverse direction, and wherein another (75) of the blanking member parts (70, 75) is applied for inter alia forming the tilting line (18) on the main body surface (11) of the transverse element (10), wherein this blanking member part (75) is adapted to forming the tilting line (18) at a central position with respect to this blanking member part (75) in the vertical transverse direction.

7. Divided blanking member which is designed to be applied for the purpose of carrying out the method according to any of claims 1-6, comprising at least two blanking member parts (70, 75), wherein main surfaces (43, 44) of the blanking member parts (70, 75) correspond to interconnected parts of the main body surface (11) of the transverse element (10) on which the tilting line (18) is formed.

8. Divided blanking member according to claim 7, wherein the main surfaces (43, 44) of the blanking member parts (70, 75) are butted against each other in an unstepped manner.

9. Divided blanking member according to claim 7 or 8, wherein one (70) of the blanking member parts (70, 75) is suitable for forming a projection (21) on the main body surface (11) of the transverse element (10), whereas another (75) of the blanking member parts (70, 75) is suitable for forming a tilting line (18) on the main body surface (11) of the transverse element (10).

10. Divided blanking member according to claim 7 or 8, wherein one (70) of the blanking member parts (70, 75) is suitable for inter alia forming a projection (21) on the main body surface (11) of the transverse element (10), and wherein this blanking member part (70) is adapted to forming the projection (21) at a central position with respect to this blanking member part (70) in a vertical transverse direction, and wherein another (75) of the blanking member parts (70, 75) is suitable for inter alia forming the tilting line (18) on the main body surface (11) of the transverse element (10), wherein this blanking member part (75) is adapted to forming the tilting line (18) at a central position with respect to this blanking member part (75) in the vertical transverse direction.

11. Divided blanking member according to any of claims 7-10, comprising a blanking surface (41) which in the vertical height comprises successively a basic portion, a relatively narrow neck portion, and a top portion which is shaped like the tip of an arrow, wherein one (70) of the blanking member parts (70, 75) comprises the top portion and a part of the neck portion, and wherein another (75) of the blanking member parts (70, 75) comprises the basic portion and another part of the neck portion.

12. Blanking device, provided with at least one divided blanking member according to any of claims 7-11.

## Patentansprüche

1. Verfahren zum Herstellen eines Querelements (10) aus einem Grundmaterial (50), wobei das Querelement (10) ausgestaltet ist, um Teil eines Schubriemens (6) für ein stufenloses Getriebe (1) zu sein, **gekennzeichnet durch** einen Schritt des Ausbildens einer Kipp-Linie (18) auf einer Hauptkörperoberfläche (11) des Querelementes (10), wobei die Kipp-Linie (18) zur Ermöglichung des Kontaktes des Querelementes (10) mit einem weiteren Querelement (10) und zur Durchführung einer Neigungsbewegung in Bezug zu dem weiteren Querelement (10) in einem Schubriemen (6) dient, wobei die Hauptkörperoberfläche (11) des Querelementes (10), auf welcher die Kipp-Linie (18) ausgebildet wird, gleichzeitig **durch** mindestens zwei Stanzelementteile (70, 75) bearbeitet wird.

2. Verfahren nach Anspruch 1, in dem Hauptoberflächen (43, 44) der Stanzelementteile (70, 75), welche zum Kontaktieren und Bearbeiten der Hauptkörperoberfläche (11) des Querelementes (10) dienen, in einer nicht abgestuften Weise gegeneinander gehalten werden.

3. Verfahren nach Anspruch 1 und 2, in dem ein Grundmaterial (50), welches mit mindestens einer Stufe (51) versehen ist, eingesetzt wird.

4. Verfahren nach irgendeinem der Ansprüche 1 bis 3, in dem die Stanzelementteile (70, 75) unterschiedlich belastet werden.

5. Verfahren nach irgendeinem der Ansprüche 1 bis 4, in dem Eins (70) der Stanzelementteile (70, 75) unter anderem zur Ausbildung eines Vorsprunges (21) auf der Hauptkörperoberfläche (11) des Querelementes (10) eingesetzt wird, wohingegen ein Weiteres (75) der Stanzelementteile (70, 75) unter anderem zur Ausbildung einer Kipp-Linie (18) auf der Hauptkörperoberfläche (11) des Querelementes (10) eingesetzt wird.

6. Verfahren nach irgendeinem der Ansprüche 1 bis 4, in dem Eins (70) der Stanzelementteile (70, 75) unter anderem zur Ausbildung eines Vorsprunges (21) auf der Hauptkörperoberfläche (11) des Querelementes (10) eingesetzt wird, wobei dieses Stanzelementteil (70) ausgebildet ist, um den Vorsprung (21) an einer zentralen Position in Bezug auf dieses Stanzelementteil (70) in vertikaler Querrichtung auszubilden, und in dem ein weiteres (75) der Stanzelementteile (70, 75) unter anderem zur Ausbildung der Kipp-Linie (18) auf der Hauptkörperoberfläche (11) des Querelementes (10) eingesetzt wird, wobei dieses Stanzelementteil (75) ausgebildet ist, um die Kipp-Linie (18) an einer zentralen Position in Bezug zu diesem Stanzelementteil (75) in der vertikalen Querrichtung auszubilden.

7. Geteiltes Stanzelement, welches ausgestaltet ist, um zum Zwecke der Durchführung des Verfahrens nach irgendeinem der Ansprüche 1 bis 6 angewandt zu werden, umfassend mindestens zwei Stanzelementteile (70, 75), wobei die Hauptoberflächen (43, 44) der Stanzelementteile (70, 75) verbundenen Teilen der Hauptkörperoberfläche (11) des Querelementes (10) entsprechen, auf welchen die Kipp-Linie (18) ausgebildet wird.

8. Geteiltes Stanzelement nach Anspruch 7, in dem die Hauptoberflächen (43, 44) der Stanzelementteile (70, 75) in einer ungestuften Weise aneinander anliegen.

9. Geteiltes Stanzelement nach Anspruch 7 oder 8, in dem Eins (70) der Stanzelementteile (70, 75) zur Ausbildung eines Vorsprunges (21) auf der Hauptkörperoberfläche (11) des Querelementes (10) geeignet ist, wohingegen ein Weiteres (75) der Stanzelementteile (70, 75) zur Ausbildung einer Kipp-Linie (18) auf der Hauptkörperoberfläche (11) des Querelementes (10) geeignet ist.

10. Geteiltes Stanzelement nach Anspruch 7 oder 8, in dem Eins (70) der Stanzelementteile (70, 75) unter anderem zur Ausbildung eines Vorsprunges (21) auf der Hauptkörperoberfläche (11) des Querelementes (10) eingesetzt wird, wobei dieses Stanzelementteil (70) ausgebildet ist, um den Vorsprung (21) an einer zentralen Position in Bezug auf dieses Stanzelementteil (70) in vertikaler Querrichtung auszubilden, und in dem ein Weiteres (75) der Stanzelementteile (70, 75) unter anderem zur Ausbildung der Kipp-Linie (18) auf der Hauptkörperoberfläche (11) des Querelementes (10) eingesetzt wird, wobei dieses Stanzelementteil (75) ausgebildet ist, um die Kipp-Linie (18) an einer zentralen Position in Bezug zu diesem Stanzelementteil (75) in der vertikalen Querrichtung auszubilden.

11. Geteiltes Stanzelement nach irgendeinem der Ansprüche 7 bis 10, umfassend eine Stanzoberfläche (41), welche in der vertikalen Höhe sukzessive einen Grundabschnitt, einen relativ engen Halsabschnitt und einen oberen Abschnitt umfasst, welcher in der Art einer Pfeilspitze ausgestaltet ist, wobei Eins (70) der Stanzelementteile (70, 75) den oberen Abschnitt und einen Teil des Halsabschnittes umfasst und wobei das Andere (75) der Stanzelementteile (70, 75) den Grundabschnitt und einen weiteren Teil des Halsabschnittes umfasst.

12. Stanzvorrichtung, ausgestaltet mit mindestens einem geteilten Stanzelement gemäß irgendeinem der Ansprüche 7 bis 11.

## Revendications

1. Procédé de formation d'un élément transversal (10) à partir d'un matériau de base (50), lequel élément transversal (10) est conçu pour faire partie d'une courroie de poussée (6) pour une transmission à variation continue (1), **caractérisé par** une étape de formation d'une ligne d'inclinaison (18) sur une surface de corps principal (11) de l'élément transversal (10), laquelle ligne d'inclinaison (18) sert à permettre à l'élément transversal (10) de toucher un autre élément transversal (10) et d'effectuer un mouvement d'inclinaison par rapport à l'autre élément transversal (10) dans la courroie de poussée (6), dans lequel la surface de corps principal (11) de l'élément transversal (10) sur laquelle on forme la ligne d'inclinaison (18) est traitée simultanément par au moins deux parties d'élément de découpage (70, 75).

2. Procédé selon la revendication 1, dans lequel les surfaces principales (43, 44) des parties d'élément de découpage (70, 75), qui servent pour toucher et traiter cette surface de corps principal (11) de l'élément transversal (10), sont maintenues l'une contre l'autre d'une manière non échelonnée.

3. Procédé selon la revendication 1 ou 2, dans lequel du matériau de base (50) qui est pourvu d'au moins un échelon (51) est appliqué.

4. Procédé selon l'une quelconque des revendications 1 à 3, dans lequel les parties d'élément de découpage (70, 75) sont chargées différemment.

5. Procédé selon l'une quelconque des revendications 1 à 4, dans lequel l'une (70) des parties d'élément de découpage (70, 75) est appliquée entre autres pour former une saillie (21) sur la surface de corps principal (11) de l'élément transversal (10), tandis qu'une autre (75) des parties d'élément de découpage (70, 75) est appliquée entre autres pour former une ligne d'inclinaison (18) sur la surface de corps principal (11) de l'élément transversal (10).

6. Procédé selon l'une quelconque des revendications 1 à 4, dans lequel l'une (70) des parties d'élément de découpage (70, 75) est appliquée entre autres pour former une saillie (21) sur la surface de corps principal (11) de l'élément transversal (10), cette partie d'élément de découpage (70) étant adaptée pour former la saillie (21) en une position centrale par rapport à cette partie d'élément de découpage (70) dans une direction transversale verticale, et dans lequel une autre (75) des parties d'élément de découpage (70, 75) est appliquée entre autres pour former la ligne d'inclinaison (18) sur la surface de corps principal (11) de l'élément transversal (10), cette partie d'élément de découpage (75) étant adaptée pour former la ligne d'inclinaison (18) en une position centrale par rapport à cette partie d'élément de découpage (75) dans la direction transversale verticale.

7. Elément de découpage divisé conçu pour être appliqué dans le but d'exécuter le procédé selon l'une quelconque des revendications 1 à 6, comprenant au moins deux parties d'élément de découpage (70, 75), dans lequel les surfaces principales (43, 44) des parties d'élément de découpage (70, 75) correspondent à des parties interconnectées de la surface de corps principal (11) de l'élément transversal (10) sur lequel est formée la ligne d'inclinaison (18).

8. Elément de découpage divisé selon la revendication 7, dans lequel les surfaces principales (43, 44) des parties d'élément de découpage (70, 75) sont mises en butée l'une contre l'autre d'une manière non échelonnée.

9. Elément de découpage divisé selon la revendication 7 ou 8, dans lequel l'une (70) des parties d'élément de découpage (70, 75) est adaptée pour former une saillie (21) sur la surface de corps principal (11) de l'élément transversal (10), tandis qu'une autre (75) des parties d'élément de découpage (70, 75) est adaptée pour former une ligne d'inclinaison (18) sur la surface de corps principal (11) de l'élément transversal (10).

10. Elément de découpage divisé selon la revendication 7 ou 8, dans lequel l'une (70) des parties d'élément de découpage (70, 75) est adaptée entre autres pour former une saillie (21) sur la surface de corps principal (11) de l'élément transversal (10), et dans lequel cette partie d'élément de découpage (70) est adaptée pour former la saillie (21) en une position centrale par rapport à cette partie d'élément de découpage (70) dans une direction transversale verticale, et dans lequel une autre (75) des parties d'élément de découpage (70, 75) est appliquée entre autres pour former la ligne d'inclinaison (18) sur la surface de corps principal (11) de l'élément transversal (10), dans lequel cette partie d'élément de découpage (75) est adaptée pour former la ligne d'inclinaison (18) en une position centrale par rapport à cette partie d'élément de découpage (75) dans la direction transversale verticale.

11. Elément de découpage divisé selon l'une quelconque des revendications 7 à 10, comprenant une surface de découpage (41) qui, dans la hauteur verticale, comprend successivement une portion de base, une portion de col relativement étroite, et une portion supérieure qui a la forme du bout d'une flèche, dans lequel l'une (70) des parties d'élément de découpage (70, 75) comprend la portion supérieure et une partie de la portion de col, et dans lequel une autre (75) des parties d'élément de découpage (70, 75) comprend la portion de base et une autre partie de la portion de col.

12. Dispositif de découpage pourvu d'au moins un élément de découpage divisé selon l'une quelconque des revendications 7 à 11.
